# EUROPEAN PATENT SPECIFICATION

(11) **EP 2 145 802 B1**
(45) Date of publication and mention of the grant of the patent: **14.11.2012**
(21) Application number: 08382030.8
(22) Date of filing: 18.07.2008
(51) Int. Cl.: B60R 21/217

(54) **Airbag module for motor vehicles which can be adapted to the surrounding trim**
Airbagmodul für Kraftfahrzeuge, das an den Umgebungsabgleich angepasst werden kann
Module d'airbag pour véhicules à moteur qui peut être adapté à la compensation environnante

(43) Date of publication of application: 20.01.2010
(73) Proprietor: Dalphi Metal España, S.A., 28006 Madrid (ES)
(72) Inventor: Ramon Ramos, Agustín, 36213, Vigo, Pontevedra (ES)
(74) Representative: Mehnert, Bernhard

(56) References cited:
- EP-A- 1 088 711
- DE-U1- 29 813 911
- JP-A- 2000 238 602
- US-B1- 6 283 497
- US-B1- 6 422 589

## Description

### FIELD OF THE INVENTION

The present invention relates to a method of providing an airbag module suitable for different motor vehicle platforms.

An airbag module consists essentially of a folded bag which is housed inside a casing and inflated rapidly by means of a gas produced by a generator when given sensor devices detect an impact suffered by the vehicle. In this way the bag opens out between the occupant of the vehicle and a zone of the vehicle, protecting the occupant during impact.

There is a growing tendency in the motor car industry, especially with regard to passenger airbag modules, to use modules which, whilst satisfying the functional requirements applicable in each case, have a design which facilitates mounting thereof inside the motor vehicle.

An airbag module of this type is described in US 6,283,497, said module comprising a single-piece casing which houses the gas generator and a part for fixing the inflatable bag to the casing by means of clip-on means.

For its part, the patent US 6,422,589 describes an airbag module similar to the above module in that the separate parts of the airbag module are made of recyclable plastic, which facilitates recycling of the airbag module without the need for disassembly thereof.

Finally, JP2002238602, which is considered as the closest prior art, discloses an airbag module comprising a single piece casing housing a gas generator and an associated airbag, wherein the casing is fixed to a flange provided as part of the vehicle trim.

A drawback of this type of airbag module consists in the fact that, considering the cost arising from the use of single-piece casings manufactured by injecting plastic inside a mould with the desired shape, some form of adaptation is required if one wishes to use the same type of airbag in different makes of vehicle.

The present invention aims to overcome this drawback.

One object of the present invention is to provide a method of providing an airbag module which can be easily adapted to different makes of vehicles which, whilst requiring airbag modules with substantially the same performance features, have differently configured surrounding trim where the airbag module must be fixed.

The objective is solved in an inventive manner by the features of claim 1. The inventive method according to the present invention advantageously provides an airbag module with a protective cover securely fixed thereto so as to facilitate handling thereof from the moment it is manufactured to the time when it is installed in the motor vehicle.

Advantageously, as provided by the inventive method, such an airbag module for motor vehicles comprises a single-piece casing which houses a gas generator at the bottom thereof and an inflatable bag which is fixed to the top of the casing by means of a flange which has first parts for performing clip-on fixing inside cooperating means arranged in the casing, said flange also including specific means for fixing the airbag module to the surrounding trim of the vehicle so as to be able to provide airbag modules with identical performance features which can be adapted to different makes of vehicles.

In a preferred embodiment of the invention said specific means consist of holes in the upper face of the flange intended to receive cooperating means provided for this purpose so as to fix the airbag module to the surrounding trim of the vehicle. This thereby results in an airbag module of the screw-in type suitable for fixing to the surrounding trim of the vehicle.

In another preferred embodiment said specific means consist of projections on the side faces of the flange, intended to be used with cooperating means provided for this purpose so as to fix the airbag module to the surrounding trim of the vehicle. This thereby results in an airbag module of the clip-on type suitable for fixing to the surrounding trim of the vehicle.

In another preferred embodiment of the invention, the airbag module includes a protective cover fixed to the casing by said flange. This thereby results in an airbag module which can be easily handled and mounted on the motor vehicle.

Other characteristic features and advantages of the present invention will emerge from the following detailed description of an example of embodiment, which is in no way limiting, of the subject thereof with reference to the accompanying drawings.
Figure 1a is a perspective view of a casing of an airbag module known in the art.
Figure 1b is a schematic plan view of the inflatable bag which is introduced inside the casing shown in Figure 1a.
Figure 1c is a perspective view of the flange for fixing the bag to the casing using specific means for adapting it to the surrounding trim, according to a first embodiment of the present invention.
Figure 1d is a perspective view of the flange shown in Figure 1c mounted on the casing according to Figure 1b.
Figure 2a is a perspective view of a casing of an airbag module known in the art.
Figure 2b is a perspective view of the flange for fixing the bag to the casing using specific means for adapting it to the surrounding trim, according to a second embodiment of the present invention.
Figure 2c is a perspective view of the flange shown in Figure 2b, mounted on the casing according to Figure 2a.
Figure 3 is a perspective exploded view of the basic components of an airbag module according to the present invention, including a protective cover.

### DETAILED DESCRIPTION OF THE INVENTION

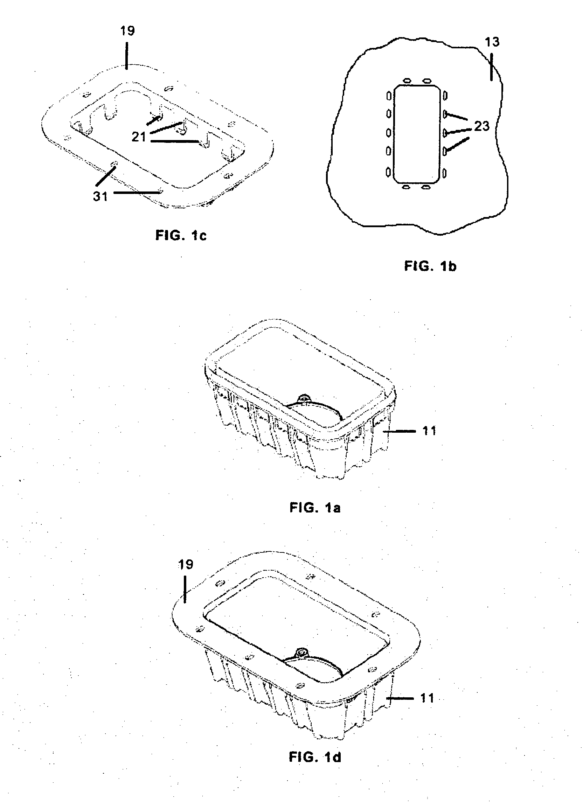

The basic components of the airbag module according to a first preferred embodiment of the present invention shown in Figures 1a, 1b, 1c and 1d are the casing 11, the bag 13, the flange 19 for fixing the bag 13 to the casing 11 and the generator (not shown).

The casing 11 acts as a housing for the bag 13 and the generator, is formed as one piece and is preferably made of plastic.

The bag 13 is folded up inside the casing 11 and is fixed to the top part thereof by means of the fixing flange 19 which is preferably made of plastic and which is clipped onto the casing 11, in a known manner, by means of clip-on fixing parts 21 which, by passing through the holes 23 in the bag, also serve as means for fixing the latter.

In order to perform said clip-in operation, the wall of the casing 11 has projections for retaining the fixing parts 21 and, at the top thereof, a plate-like strip parallel to the wall, defining a channel inside which the fixing parts 21 of the flange 19 are inserted, the latter being made of a resiliently deformable material so as to ensure retention of the fixing parts 21.

According to the first embodiment of the present invention, the flange 19 has, in its upper face, holes 31 as specific means intended to fix the airbag module inside the motor vehicle. In the surrounding trim of the motor vehicle there are cooperating means for performing the fixing operation, such as, for example, a rigid platform for fixing the airbag module therein by means of screws passing through the holes 31 of the flange 19.

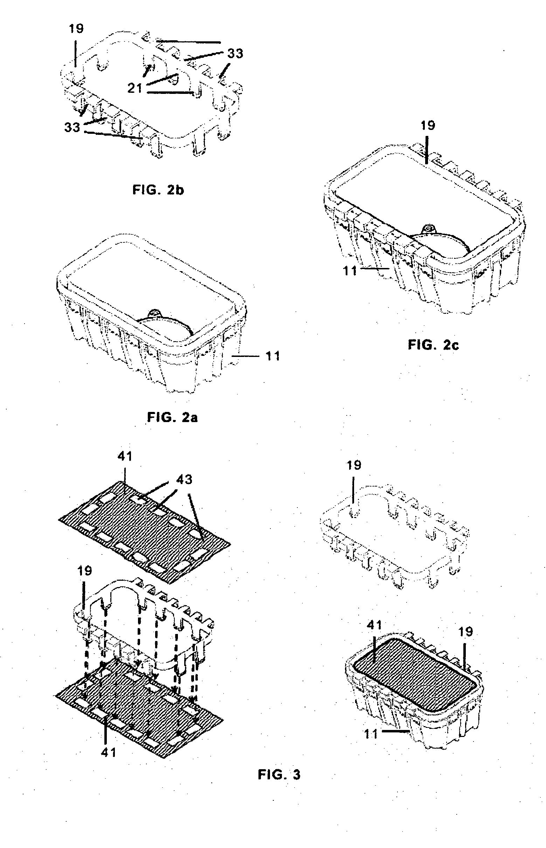

In a second preferred embodiment of the invention shown in Figures 2a, 2b and 2c, where the bag has been omitted, it can be seen that the flange 19 has, in its upper face, projections 33 as specific means intended to fix the airbag module inside the motor vehicle. In the surrounding trim of the motor vehicle there are cooperating means for performing the fixing operation, such as, for example, a rigid platform for fixing the airbag module therein by means of a connection piece clipped in position between said projections 33 and corresponding parts in the platform.

As shown in Figure 3 the airbag module may additionally include a protective cover 41 with perimetral holes 43 for fixing it to the airbag module by means of the fixing parts 21.

An advantage of the present invention is that it is able to reduce the cost of the airbag modules intended for platforms which include makes of vehicle differing from each other in terms of the surrounding trim of the airbag module in question even though they have substantially identical functional requirements. Instead of having to manufacture different casings for the different versions of platform, the airbag module according to the present invention uses the same casing and a specific flange for each different version for which it is intended, this resulting in a substantial reduction in costs.

Among the different types of airbag modules it is considered that the present invention is particularly suitable for passenger airbag modules and knee airbag modules, in that these types of module are particularly subject to differences in the surrounding trim in the different makes of motor vehicles.

Although various embodiments of the invention have been described and illustrated, it is obvious that modifications included within the scope of the said invention may be made thereto, whereby said scope must not be regarded as being limited to said embodiments, but to the contents of the following claims.

## Claims

1. Method of providing an airbag module suitable for different motor vehicle platforms, **characterized by**:
providing a single-piece casing (11) suitable for the different platforms which houses a gas generator at the bottom thereof,
choosing a specific flange (19) from a number of different flanges (19, 19), wherein the chosen specific flange (19) includes specific means (31, 33) for fixing the respective airbag module to the surrounding trim of the specific motor vehicle so as to be able to provide airbag modules with identical performance features to different vehicle platforms, and
fixing an inflatable bag (13) to the top of the casing (11) by means of parts (21) for performing clip-on fixing inside cooperating means arranged in the casing (11).

2. Method according to Claim 1, **characterised by** a step of providing a protective cover (41) for the airbag module.

3. Method according to Claim 2, **characterized in that** the protective cover (41) is fixed to the casing (11) by means of the flange (19), being provided for this purpose with perimetral holes (43) cooperating with said first fixing parts (21).

4. Airbag module for motor vehicles provided according to the method of one of the claims 1 to 3 **characterized in that** said airbag module comprises a single-piece casing (11) suitable for different platforms, wherein the single-piece casing (11) houses a gas generator at the bottom thereof and an inflatable bag (13) which is fixed to the top of the casing (11) by means of a flange (19), and wherein the single-piece casing (11) has specific means (31, 33) for fixing the airbag module to the surrounding trim of the vehicle, the flange (19) including first parts (21) for performing clip-on fixing inside cooperating means arranged in the casing (11), and **in that** said flange (19) is configured specifically for a specific vehicle platform so as to be able to provide airbag modules with identical performance features to different platforms of vehicles.

5. Airbag module according to Claim 4, **characterized in that** said specific fixing means consist of holes (31) in the upper face of the flange (19) intended to receive cooperating means provided for this purpose so as to fix the airbag module to the surrounding trim of the vehicle.

6. Airbag module according to Claim 4, **characterized in that** said specific means consist of projections (33) on the side faces of the flange (19), intended to be used together with cooperating means provided for this purpose so as to fix the airbag module to the surrounding trim of the vehicle.

7. Airbag module according to any one of Claims 4 to 6, **characterized in that** the means provided in the surrounding trim of the vehicle for cooperating with said specific fixing means (31, 33) of the flange (19) are situated in a rigid part of the vehicle.

8. Airbag module according to any one of Claims 4 to 7, **characterized in that** it also includes a protective cover (41) for the airbag module which is fixed to the casing (11) by means of the flange (19), being provided for this purpose with perimetral holes (43) cooperating with said first fixing parts (21).

9. Airbag module according to any one of Claims 4 to 8, **characterized in that** it is a passenger airbag module.

10. Airbag module according to any one of Claims 4 to 8, **characterized in that** it is a knee airbag module.

## Patentansprüche

1. Verfahren zur Bereitstellung eines Airbagmoduls, das für verschiedene Kraftfahrzeugunterböden geeignet ist,
**gekennzeichnet durch**:
Vorsehen eines für die verschiedenen Unterbauten geeigneten, einstückigen Gehäuses (11), das an seinem Boden einen Gasgenerator aufnimmt,
Auswählen eines speziellen Flansches (19) aus einer Reihe unterschiedlicher Flansche (19, 19), wobei der ausgewählte spezielle Flansch (19) spezielle Einrichtungen (31, 33) zum Befestigen des jeweiligen Airbagmoduls an der Außenverkleidung des speziellen Kraftfahrzeuges, um Airbagmodule mit identischen Leistungsmerkmalen für verschiedene Fahrzeugunterbauten bereitstellen zu können, und
Befestigen eines aufblasbaren Sacks (13) an dem oberen Teil des Gehäuses (11) über Teile (21) zum Durchführen einer Anklemmbefestigung innerhalb von in dem Gehäuse (11) angeordneten, zusammenwirkenden Einrichtungen.

2. Verfahren gemäß Anspruch 1, **gekennzeichnet durch** einen Schritt zum Bereitstellen einer Schutzabdeckung (41) für das Airbagmodul.

3. Verfahren gemäß Anspruch 2, **dadurch gekennzeichnet, dass** die Schutzabdeckung (41) über den Flansch (19) an dem Gehäuse (11) befestigt ist, wobei der Flansch zu diesem Zweck mit perimetrischen, mit den ersten Befestigungsteilen (21) zusammenwirkenden Löchern (43) versehen ist.

4. Airbagmodul für Kraftfahrzeuge, das nach dem Verfahren gemäß einem der Ansprüche 1 bis 3 bereitgestellt ist, **dadurch gekennzeichnet, dass** das Airbagmodul ein für verschiedene Unterbauten geeignetes, einstückiges Gehäuse (11) umfasst, wobei das einstückige Gehäuse (11) einen Gasgenerator an dessen Boden sowie einen aufblasbaren Sack (13) aufnimmt, der an der Oberseite des Gehäuses (11) über einen Flansch (19) befestigt ist, und wobei das einstückige Gehäuse (11) spezielle Einrichtungen (31, 33) zum Befestigen des Airbagmoduls an der Außenverkleidung des Fahrzeuges aufweist, wobei der Flansch (19) erste Teile (21) zur Durchführung einer Anklemmbefestigung in zusammenwirkenden, in dem Gehäuse (11) angeordneten Einrichtungen aufweist, und dass der Flansch (19) insbesondere für einen speziellen Fahrzeugunterbau ausgeführt ist, um Airbagmodule mit identischen Leistungsmerkmalen für verschiedene Fahrzeugunterbauten bereitstellen zu können.

5. Airbagmodul gemäß Anspruch 4, **dadurch gekennzeichnet, dass** spezielle Befestigungseinrichtungen aus Löchern (31) in der Oberfläche des Flansches (19) bestehen, welche zu diesem Zweck vorgesehene, zusammenwirkende Einrichtungen aufnehmen sollen, um das Airbagmodul an der Außenverkleidung des Fahrzeuges zu befestigen.

6. Airbagmodul gemäß Anspruch 4, **dadurch gekennzeichnet, dass** die speziellen Einrichtungen aus Vorsprüngen (33) an den Seitenflächen des Flansches (19) bestehen, die zusammen mit zu diesem Zweck vorgesehenen, zusammenwirkenden Einrichtungen eingesetzt werden sollen, um das Airbagmodul an der Außenverkleidung des Fahrzeuges zu befestigen.

7. Airbagmodul gemäß einem der Ansprüche 4 bis 6, **dadurch gekennzeichnet, dass** sich die in dem Rand der Fahrzeugverkleidung zum Zusammenwirken mit den speziellen Befestigungseinrichtungen (31, 33) des Flansches (19) vorgesehenen Einrichtungen in einem starren Teil des Fahrzeuges befinden.

8. Airbagmodul gemäß einem der Ansprüche 4 bis 7, **dadurch gekennzeichnet, dass** es außerdem eine Schutzabdeckung (41) für das Airbagmodul aufweist, welche über den Flansch (19) an dem Gehäuse (11) befestigt ist, wobei der Flansch zu diesem Zweck mit perimetrischen, mit den ersten Befestigungsteilen (21) zusammenwirkenden Löchern (43) versehen ist.

9. Airbagmodul gemäß einem der Ansprüche 4 bis 8, **dadurch gekennzeichnet, dass** es sich um ein Beifahrer-Airbagmodul handelt.

10. Airbagmodul gemäß einem der Ansprüche 4 bis 8, **dadurch gekennzeichnet, dass** es sich um eine Knieairbagmodul handelt.

## Revendications

1. Procédé pour fournir un module airbag adapté à différentes plateformes de véhicules automobiles, **caractérisé par**:
la fourniture d'un boîtier monobloc (11) adapté pour les plates-formes différentes, qui loge un générateur de gaz en partie inférieure de celui-ci,
en choisissant un flasque spécifique (19) à partir d'un certain nombre de flasques différents (19, 19), dans lequel le flasque spécifique choisi (19) comprend des moyens spécifiques (31, 33) pour assurer la fixation du module airbag à la garniture environnante du véhicule automobile spécifique de manière à être en mesure de fournir des modules airbag avec des caractéristiques de performances identiques à des plateformes de véhicules différents, et
la fixation d'un sac gonflable (13) à la partie supérieure du boîtier (11) au moyen de pièces (21) pour effectuer une fixation par clipsage à l'intérieur de moyens correspondants disposés dans le boîtier (11).

2. Procédé selon la revendication 1, **caractérisé par** une étape consistant à fournir un couvercle de protection (41) pour le module airbag.

3. Procédé selon la revendication 2, **caractérisé en ce que** le couvercle de protection (41) est fixé sur le boîtier (11) au moyen du flasque (19), étant fourni à cet effet avec des trous périmétriques (43) correspondant avec lesdites premières pièces de fixation (21).

4. Module d'airbag pour véhicules à moteur fourni selon l'une des revendications 1 à 3, **caractérisé en ce que** ledit module airbag comprend un boîtier monobloc (11) adapté à différentes plateformes, dans lequel le boîtier monobloc (11) loge un générateur de gaz dans sa partie inférieure et un sac gonflable (13) qui est fixé à la partie supérieure du boîtier (11) au moyen d'un flasque (19), et dans lequel le boîtier monobloc (11) comporte des moyens spécifiques (31, 33) pour la fixation du module airbag à la garniture environnante du véhicule, le flasque (19) comprenant des premières parties (21) pour assurer la fixation par clipsage à l'intérieur de moyens correspondants disposés dans le boîtier (11), et **en ce que** ledit flasque (19) est configuré spécifiquement pour une plateforme spécifique de véhicules de manière à être en mesure de fournir des modules de coussin gonflable avec des caractéristiques de performances identiques à différentes plateformes de véhicules.

5. Module d'airbag selon la revendication 4, **caractérisé en ce que** lesdits moyens de fixation spécifiques sont constitués de trous (31) dans la face supérieure du flasque (19) destinés à recevoir des moyens correspondants prévus à cet effet de manière à fixer le module d'airbag à la garniture environnante du vehicule.

6. Module d'airbag selon la revendication 4, **caractérisé en ce que** lesdits moyens spécifiques sont constitués d'ergots (33) sur les faces latérales du flasque (I9), destinées à être utilisées conjointement avec des moyens correspondants prévus à cet effet de manière à fixer le module d'airbag à la garniture environnante du véhicule.

7. Module d'airbag selon l'une quelconque des revendications 4 à 6, **caractérisé en ce que** les moyens prévus dans la garniture environnante du véhicule pour correspondre avec lesdits moyens de fixation spécifique (31, 33) du flasque (19) sont situés dans une partie rigide de le véhicule.

8. Module d'airbag selon l'une quelconque des revendications 4 à 7, **caractérisé en ce qu'**il comprend également un couvercle de protection (41) pour le module airbag qui est fixé sur le boîtier (11) au moyen du flasque (19), étant fourni à cet effet avec des trous périmétriques (43) correpondant avec lesdites premières pièces de fixation (21).

9. Module d'airbag selon l'une quelconque des revendications 4 à 8, **caractérisé en ce qu'**il s'agit d'un module airbag passager.

10. Module airbag selon l'une quelconque des revendications 4 à 8, **caractérisé en ce qu'**il s'agit d'un module airbag genoux.
